# DEMANDE DE BREVET EUROPEEN

(11) **EP 3 272 626 A1**
(43) Date de publication de la demande: **24.01.2018**
(21) Numéro de dépôt: 17181814.9
(22) Date de dépôt: 18.07.2017
(51) Int. Cl.: B62D 11/00, B62D 11/04, B62D 11/24

(54) **DISPOSITIF DE COMMANDE DES CHENILLES D'UN ENGIN A CHENILLES, APTE A ROULER SUR ROUTE**

(30) Priorité: 18.07.2016 FR 1656825
(71) Demandeur: Hubertrack, 16130 Salles-d'Angles (FR)
(72) Inventeur: DESRENTES, Jean-Luc, 16100 LOUZAC SAINT-ANDRE (FR)
(74) Mandataire: Aquinov

(57) **Abrégé**

L'objet de l'invention est un dispositif de commande des chenilles d'un engin à chenilles (10), comportant deux chenilles (10G, 10D), gauche et droite, un moteur hydraulique par chenille, alimenté chacun par une pompe à plateaux (18G, 18D) elle-même alimentée par une pompe de gavage (36, 38), lesdites pompes étant commandées par un vérin double effet (20G, 20D) et un distributeur hydraulique à tiroir (22G, 22D), des distributeurs à poussoirs (24) associés à des cames (26) montées sur une colonne d'un volant (30), caractérisé en ce qu'il comprend deux leviers (A1, A2), accouplés mécaniquement, associés à des distributeurs à poussoirs (32, 34) pour la commande du débit de fluide hydraulique des pompes d'une part et pour générer un différentiel de débit entre la chenille droite et la chenille gauche d'autre part.

## Description

La présente invention concerne un dispositif de commande d'un engin à chenilles, apte à rouler sur route.

Les engins à chenilles sont de plus en plus utilisés notamment en milieu agricole et plus particulièrement de la vigne, du fait de la très faible pression exercée au sol. En effet, la surface des chenilles est importante et permet de diminuer la pression exercée en répartissant au mieux le poids de l'engin, ce qui limite le compactage des sols.

Ces engins sont de plus en plus appréciés pour le travail du sol car ils permettent de travailler quel que soit l'état du sol et même si les conditions climatiques sont mauvaises, même si le terrain est humide, les chenilles peuvent toujours passer sans compacter le sol de façon poinçonnante comme c'est le cas des véhicules sur roues.

Or, les engrais par exemple ou les traitements phytosanitaires sont d'autant plus efficaces qu'ils sont réalisés à la date nécessaire. Les engrais sont distribués en petites quantités mais plus souvent, tant pour en réduire la quantité en regard d'un respect écologique que d'un point de vue financier pour limiter les coûts, impliquant dès lors des passages plus nombreux.

Les roues d'appui sont sur suspensions pour le train de galets central et les chenilles sont tendues entre deux roues dont l'une est motrice et généralement dénommée barbotin.

Le barbotin est généralement situé en partie arrière, ce qui est le cas pour l'engin selon la présente invention.

Dans le cas de la présente invention, l'engin à chenilles comprend uniquement deux roues et un train de deux galets ceci pour chaque chenille.

Les barbotins sont généralement entraînés chacun par un moteur hydraulique. Un moteur à explosion interne, du type moteur diesel, fournit la puissance pour faire tourner la ou les pompes hydrauliques nécessaires pour alimenter le circuit hydraulique et notamment les moteurs des barbotins.

Un tel engin à chenilles est adapté pour travailler en milieu naturel et dans les propriétés agricoles. Néanmoins, les entrepreneurs en travaux agricoles, les propriétaires de différentes parcelles non contiguës sont amenés à devoir se déplacer sur route.

Or, un engin à chenilles ne peut tourner que par une vitesse différentielle des chenilles l'une par rapport à l'autre. Si la chenille gauche tourne moins rapidement que la chenille droite, l'engin à chenilles tournera à gauche. Le pivotement est obtenu par ripage des chenilles sur le support car les chenilles restent parallèles à l'axe longitudinal de l'engin, sans aucune rotation. Or, si le sol est meuble, une telle opération est aisée surtout quand il y a avancement combiné avec une rotation.

Sur route, le problème est différent car l'asphalte et la constitution des sous-couches de la route assurent une excellente reprise des poids exercés par les véhicules. La route peut subir une pression très supérieure à un sol naturel et la surface des chenilles devient inutile.

Cela devient même un inconvénient car la surface au sol des chenilles est importante et limite fortement la vitesse de déplacement sans compter que les virages sont plus difficiles sur un sol non meuble et les revêtements caoutchoutés des chenilles s'usent comme le revêtement routier qui peut être dégradé.

De plus, compte tenu des frottements des chenilles sur le revêtement, la vitesse de déplacement reste également limitée.

Une solution consiste à disposer un train avant directeur à au moins une roue en avant de l'engin. Le train directeur peut prendre au moins deux positions, une première position dans laquelle la roue du train avant directeur est en appui au sol et l'engin est soulevé sur l'avant, seul l'arrière des chenilles étant en appui au sol et une seconde position dans laquelle le train avant directeur est escamoté et l'engin à chenilles repose intégralement sur lesdites chenilles.

Un tel engin doit être commandé de façon qu'un opérateur puisse assurer toutes les fonctions aisément.

Le train avant directeur est monté à rotation autour d'un axe sensiblement vertical et des moyens de commande à vérin double effet, notamment du type de ceux commercialisés sous la marque Orbitrol^{®}, permet de faire pivoter le support de roue par rapport audit axe vertical et donc à la rendre directrice.

De tels moyens de commande à vérin double effet comprennent un boîtier hydraulique avec un arbre relié au volant qui délivre du fluide hydraulique sous pression dans une chambre ou dans l'autre du vérin double effet.

Un vérin agissant sur un levier déporté permet d'assurer les mêmes effets.

Par contre si un volant est utilisé pour le pilotage de la roue du train avant directeur, ce même volant est avantageusement utilisé pour le pilotage des chenilles.

La présente invention propose un dispositif de commande des chenilles d'un engin à chenilles, à l'aide d'un volant, en assurant une pression de commande aux pompes qui reste constante et qui supprime les ralentissements lors des manoeuvres du volant par l'opérateur.

Le dispositif de commande selon la présente invention est maintenant décrit en regard des dessins annexés, dessins sur lesquels les différentes figures représentent :
- Figure 1 : une vue générale d'un engin selon la présente invention,
- Figure 2 : une vue d'un schéma hydraulique selon la présente invention, en réalisation avec tiroir hydraulique,
- Figure 3 : une vue d'un schéma hydraulique selon la présente invention, avec déviateurs commandés électriquement,
- Figure 4 : une vue du train avant directeur, plus détaillée,
- Figures 5A, 5B : une vue des positions respectivement de roulage sur route et de travail sur chenilles de l'engin à chenilles.

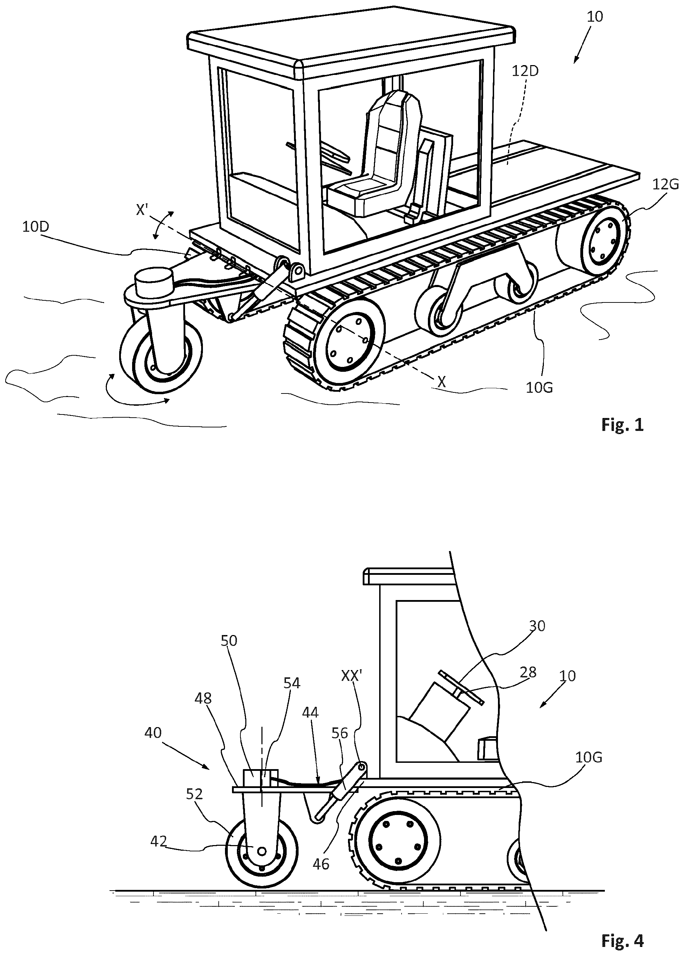

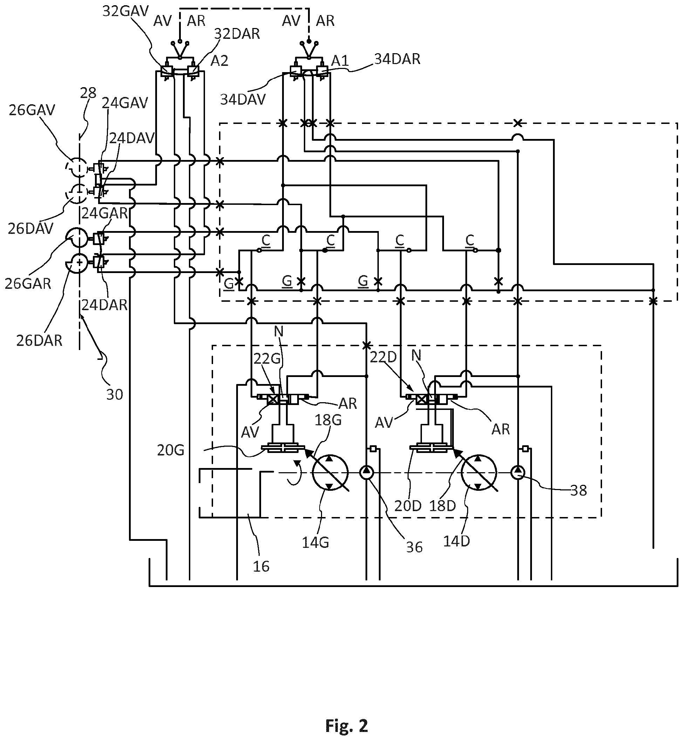

Sur la figure 1, on a représenté un engin à chenilles 10 équipé de chaque côté d'une chenille 10G, 10D. Chaque chenille est entraînée par un barbotin 12G, 12D, lui-même équipé d'un moteur hydraulique, non représenté, soumis au fluide hydraulique d'entraînement délivré par une pompe hydraulique 14G et 14D, comme représenté sur le schéma hydraulique de la figure 2.

Un moteur thermique 16, du type moteur diesel par exemple, assure la puissance de travail et l'entraînement desdites pompes hydrauliques 14G et 14D.

Ces pompes hydrauliques 14G et 14D sont du type à débit variable. En l'occurrence, les pompes hydrauliques sont des pompes hydrauliques 14G et 14D à plateaux 18G, 18D.

De façon connue, chacune des pompes hydrauliques 14G et 14D à plateaux 18G, 18D comprend des pistons activés en translation dans une chambre par appui de chaque plateau 18G, 18D, plus ou moins incliné par un vérin 20G et 20D, double effet.

Le corps du vérin est généralement fixe et la tige du vérin est articulée sur le plateau. Plus le plateau est incliné plus le débit est important, la course en translation de chaque piston étant augmentée dans la chambre dans laquelle il est monté.

Un tiroir hydraulique 22G, 22D permet une première position neutre N, une deuxième position AV correspondant à la marche avant et une position AR qui correspond à la marche arrière, ceci en faisant circuler le fluide hydraulique dans un sens ou dans l'autre.

Dans chacune des positions, le déplacement de la tige du vérin 20G et 20D est commandé pour incliner plus ou moins chacun desdits plateaux. Des paires de distributeurs à poussoirs 24GAV/24DAV et 24GAR/24DAR sont actionnées par des cames 26GAV/26DAV et 26GAR/26DAR, montées sur la colonne 28 d'un volant 30.

Chaque came 26 vient en appui sur les poussoirs des distributeurs 24 en fonction de leur positionnement angulaire sur la colonne, comme cela sera mieux compris à la lecture du fonctionnement qui suivra plus avant dans la présente description.

Dans le cas de la présente invention, la commande de marche avant et arrière comprend deux leviers A1 et A2, agissant chacun sur un distributeur à poussoirs 32GAV et 34DAV pour la marche avant et un distributeur à poussoirs 32GAR et 34DAR pour la marche arrière.

Ces deux leviers A1 et A2 sont couplés mécaniquement de façon que la manoeuvre d'un des leviers assure la manoeuvre simultanée et identique de l'autre des leviers.

Pour alimenter les pompes hydrauliques, il est nécessaire de prévoir une pompe de gavage, en l'occurrence il est prévu deux pompes de gavage 36, 38.

La pompe de gavage 36 est dédiée à l'alimentation différentielle à travers les distributeurs à poussoirs 32 du levier A2 qui alimentent les distributeurs à poussoirs 24, activés par les cames 26 du volant, tant en marche avant qu'en marche arrière, avec une pression variable liée à l'amplitude de mouvement du levier A2.

La pompe de gavage 38 est dédiée à la manoeuvre de la vitesse des chenilles à travers les distributeurs à tiroirs hydrauliques 22G, 22D des deux pompes à plateaux 18G et 18D à travers le levier A1 qui fait varier simultanément le débit de fluide en sortie de chacune des pompes et ceci en marche avant comme en marche arrière.

Les deux leviers A1 et A2 étant couplés mécaniquement, les flux variables de fluides hydrauliques et éventuellement différentiels, délivrés par les deux pompes à plateaux 18G et 18D sont transmis vers les moteurs de chacune des chenilles.

Ainsi, dans le cas où les leviers A1 et A2 sont positionnés vers l'avant, suivant l'inclinaison, les tiroirs 22G et 22D sont en position vers la droite pour faire circuler le fluide dans le sens correspondant à la marche avant.

En l'absence d'action sur le volant, comme les débits des pompes sont identiques, les deux barbotins tournent à la même vitesse et se déplacent sur les chenilles à la même vitesse. L'engin à chenille se déplace suivant une direction rectiligne.

Lorsque les cames 26GAV et 26DAV sont sollicitées par l'opérateur à travers le volant, les distributeurs 24GAV et 24DAV sont eux aussi sollicités afin de générer un différentiel de flux entre les deux chenilles, sans que ce différentiel puisse provoquer un changement de sens et passer en marche arrière puisque les tiroirs 22G et 22D sont dans la position marche avant du fait de la position du levier A1 vers l'avant.

Dans le cas où les leviers A1 et A2 sont positionnés vers l'arrière, suivant l'inclinaison, les tiroirs 22G et 22D sont en position vers la gauche pour faire circuler le fluide dans le sens correspondant à la marche arrière, ceci de façon connue.

Lorsque les cames 26GAR et 26DAR sont sollicitées par l'opérateur à travers le volant, les distributeurs 24GAR et 24DAR sont eux aussi sollicités afin de générer un différentiel de flux entre les deux chenilles, sans que ce différentiel puisse provoquer un changement de sens et passer en marche avant puisque les tiroirs 22G et 22D sont dans la position marche arrière du fait de la position du levier A1 vers l'arrière.

On note que chaque vérin double effet 20G ou 20D reçoit une pression dans une chambre mais peut aussi recevoir une contre pression dans l'autre chambre, en cas de commande de virage, ceci en marche avant comme en marche arrière, contrairement à ces types de vérins double effet qui, de façon habituelle, reçoivent une pression uniquement dans une chambre, l'autre étant à la bâche généralement.

De ce fait, il suffit de diminuer le débit de l'une des pompes en ajustant la pression dans une chambre ou dans l'autre chambre du vérin double effet de ladite pompe, ceci à travers la commande de l'opérateur qui actionne le volant dans un sens de rotation ou dans l'autre après avoir choisi le sens d'avancement AV ou AR.

C'est là tout l'intérêt de disposer d'une pompe par chenille.

Ainsi, la pression hydraulique de commande aux pompes reste constante et n'est pas affectée par le différentiel hydraulique généré par les rotations des cames agissant sur les distributeurs à poussoirs. Il n'y a donc pas de ralentissement de l'engin à chenilles lors des manoeuvres du volant par l'opérateur pour aller à droite ou à gauche.

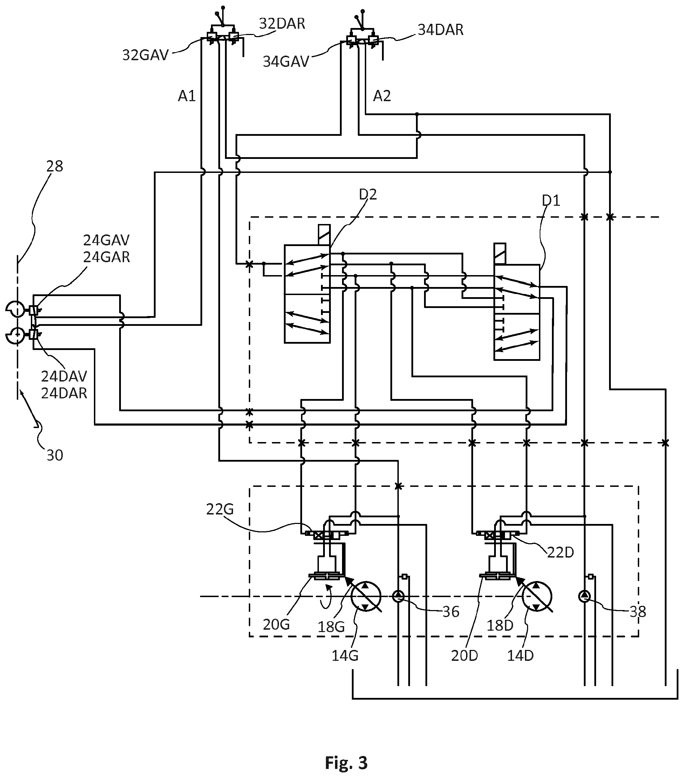

Sur la figure 3, on a représenté les mêmes circuits hydrauliques avec des déviateurs D1 et D2, commandés électriquement. Dans ce cas, les deux leviers sont couplés et agissent de la même façon sur les pompes à plateau 18G et 18D en modulant leur débit de façon à faire avancer plus ou moins vite l'engin à chenilles dans la direction avant lorsque le déviateur est basculé en marche avant et dans la direction arrière lorsque le déviateur est basculé en marche arrière.

Il y a donc un même circuit simplifié du fait que c'est le même circuit qui est utilisé en inversant le sens de circulation des fluides.

De la même façon, les cames et les distributeurs à poussoirs sont les mêmes en marche avant et en marche arrière. Le volant procure les mêmes effets de modulation différentiel des flux transmis à chaque chenille.

On note de la même façon que l'une des pompes de gavage est utilisée pour le pilotage des deux pompes à plateaux 18G et 18D et l'autre pompe de gavage assure un maintien constant de la pression hydraulique de commande auxdites pompes à plateaux.

Dans cette variante, l'opérateur doit basculer les déviateurs par une action volontaire sur une commande électrique pour basculer de la marche avant à la marche arrière.

Il est aussi possible de prévoir un perfectionnement à l'agencement électrique en adjoignant un contacteur actionné par le levier qui dans ce cas, fonctionne avec trois positions, l'un vers l'avant, l'autre en position neutre et l'autre en marche arrière.

Le contacteur est alors basculé mécaniquement par les mouvements d'un des leviers eux-mêmes. L'action de déviation est réalisée de façon transparente pour l'opérateur.

Des clapets C à navettes de type connu oriente automatiquement les flux suivant la circulation desdits fluides.

De même, des gicleurs G permettent de lisser les flux et de conférer une certaine souplesse de fonctionnement.

Sur la figure 4, on a représenté le même engin à chenilles 10, équipé de chaque côté d'une chenille 10G, 10D. Cet engin est équipé d'un train avant directeur 40 escamotable.

Ce train avant directeur 40 comprend au moins un train de roues directrices 42, comprenant au moins une roue, positionné en avant de l'engin à chenilles, sur un bras 44 porteur, solidaire du châssis dudit engin à chenilles.

Le bras 44 est muni à sa base 46 d'un axe de pivotement horizontal, autour de l'axe XX', par rapport au châssis tandis que son extrémité distale 48 porte un pivot 50 avec une chape 52 supportant le train de roues directrices 42.

Le train de roues directrices est muni de moyens de pilotage 54 en rotation de façon à le rendre directeur.

Ces moyens de pilotage 54 peuvent être un système hydraulique du type de celui commercialisé sous la marque Orbitrol® qui assure par un vérin double effet et un boîtier hydraulique, une alimentation des chambres dudit vérin, alternativement, en fonction d'une commande par un arbre prévu dans ledit boîtier pour délivrer le fluide hydraulique, ledit arbre pouvant être relié à une colonne d'un volant.

Une autre solution consiste en un vérin de commande et un bras de manoeuvre solidaire de la chape 52, ledit vérin par sa tige assurant le pivotement de ladite chape dans les deux sens. Un distributeur à levier permet de piloter ledit train de roues avant directrices.

Un vérin de relevage 56 assure la rotation de l'ensemble du bras 44 autour de l'axe XX'.

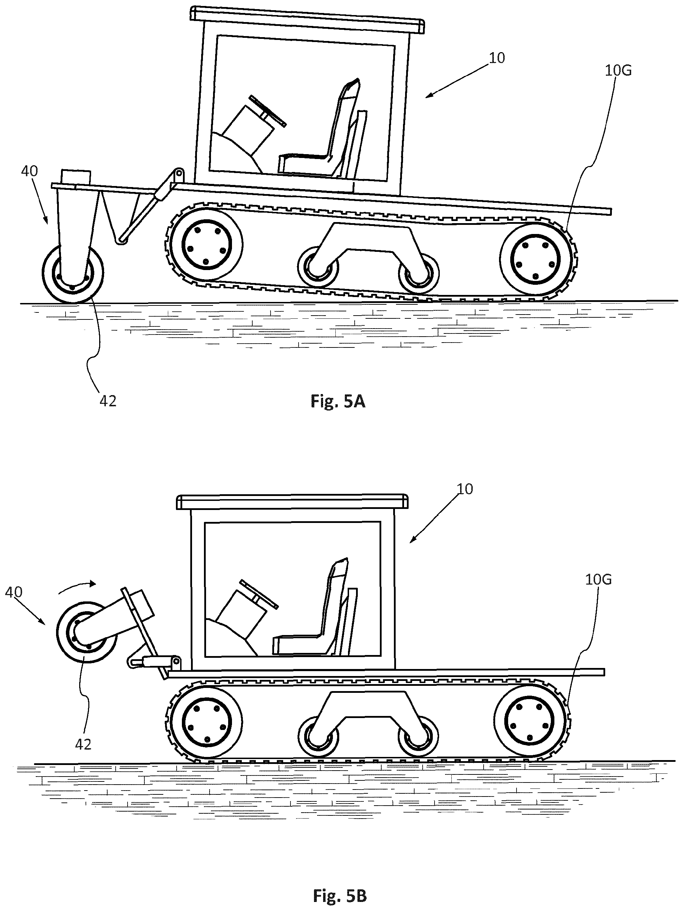

Le bras 44 peut prendre deux positions maximales, l'une dans laquelle il est relevé et le train de roues est sans contact avec le sol, en position de travail, voir figure 5A et l'autre dans laquelle ledit engin à chenilles repose sur le train de roues avant directrices et sur l'arrière des chenilles, l'engin ayant sa partie avant relevée, en position de circulation sur route, voir figure 5B.

Dans la position de circulation sur route, les chenilles ont un impact très limité sur le revêtement routier puisque seul l'arrière est au contact dudit revêtement. Sur l'avant le poids est repris par le train de roues et la nature des pneumatiques évite toute dégradation en même temps qu'une excellente dirigeabilité.

Compte tenu du fait que les chenilles sont alimentées d'une part pour faire varier la vitesse mais aussi pour délivrer un différentiel de débits hydrauliques entre les deux chenilles, il est nécessaire d'interposer un système de débrayage voire de décrabotage afin de neutraliser l'action du volant sur le différentiel de débits.

Ainsi, l'opérateur pilote la vitesse de déplacement avec les chenilles et la direction par la manoeuvre du train de roues avant directrices, elles-mêmes actionnées soit par le dispositif Orbitrol^{®} qui peut être connecté au volant ou piloté à part ou par le vérin et le bras de manoeuvre associé.

Le dispositif de commande des chenilles d'un engin à chenilles selon la présente invention permet de conduire ledit engin à chenilles en mode travail et en mode route, de façon efficace sans trouble des actions de direction sur la vitesse et qui permet de rouler au gabarit routier et en respectant les normes notamment en disposant d'une direction mécanique ou hydraulique mais non électrique puisque celles-ci sont interdites.

## Revendications

1. Dispositif de commande des chenilles d'un engin à chenilles (10), comportant deux chenilles (10G, 10D), gauche et droite, un moteur hydraulique par chenille, alimenté chacun par une pompe à plateaux (18G, 18D) elle-même alimentée par une pompe de gavage (36, 38), lesdites pompes étant commandées par un vérin double effet (20G, 20D) comprenant deux chambres et un distributeur hydraulique à tiroir (22G, 22D), des distributeurs à poussoirs (24) associés à des cames (26) montées sur une colonne d'un volant (30), **caractérisé en ce qu'**il comprend deux leviers (A1, A2), accouplés mécaniquement, associés à des distributeurs à poussoirs (32, 34) pour la commande du débit de fluide hydraulique des pompes d'une part et pour générer un différentiel de débit entre la chenille droite et la chenille gauche d'autre part, chaque vérin (20G, 20D) double effet étant alimenté dans une chambre par une pression de commande et dans l'autre chambre par une contre-pression, dans le cas d'un virage.

2. Dispositif de commande des chenilles d'un engin à chenilles, comportant deux chenilles, selon la revendication 1 ou 2, **caractérisé en ce que** l'une des pompes de gavage est reliée fluidiquement aux distributeurs du levier (A1) et l'autre pompe de gavage est reliée fluidiquement aux distributeurs du levier (A2).

3. Dispositif de commande des chenilles d'un engin à chenilles, comportant deux chenilles selon la revendication 1 ou 2, **caractérisé en ce qu'**il comprend un déviateur à commande électrique.

4. Dispositif de commande des chenilles d'un engin à chenilles, comportant deux chenilles selon la revendication 3, **caractérisé en ce que** le déviateur à commande électrique est commandé par un interrupteur actionné par un des leviers (A1) ou (A2).

5. Dispositif de commande des chenilles d'un engin à chenilles, comportant deux chenilles, selon l'une quelconque des revendications précédentes, **caractérisé en ce qu'**il comprend un train de roues avant directrices (40).

6. Dispositif de commande des chenilles d'un engin à chenilles, comportant deux chenilles, selon la revendication 5, **caractérisé en ce qu'**il comprend un train avant directeur (40) comprenant au moins un train d'au moins une roue directrice (42), positionné en avant de l'engin à chenilles, sur un bras (44) porteur, solidaire du châssis dudit engin à chenilles, muni à sa base (46) d'un axe de pivotement horizontal, autour d'un axe XX', par rapport au châssis son extrémité distale (48) portant un pivot (50) avec un chape (52) supportant ledit train de roues directrices (42).

7. Dispositif de commande des chenilles d'un engin à chenilles, comportant deux chenilles, selon la revendication 6, **caractérisé en ce qu'**il comprend un train de roues avant directrices (40) comprenant au moins un train d'au moins une roue directrice (42) muni de moyens de pilotage (54) en rotation.

8. Dispositif de commande des chenilles d'un engin à chenilles, comportant deux chenilles, selon la revendication 6 ou 7, **caractérisé en ce qu'**il comprend un vérin de relevage (56) pour la rotation de l'ensemble du bras (44) autour de l'axe XX'.
